# EUROPEAN PATENT SPECIFICATION

(11) **EP 3 070 320 B1**
(45) Date of publication and mention of the grant of the patent: **24.06.2020**
(21) Application number: 16160361.8
(22) Date of filing: 15.03.2016
(51) Int. Cl.: F02M 53/04, F02M 57/00, F02B 25/04, F02D 19/06, F02M 47/04, F02M 57/02, F02M 61/08

(54) **FUEL VALVE FOR INJECTING FUEL INTO A COMBUSTION CHAMBER OF A LARGE SELF-IGNITING TURBOCHARGED TWO-STROKE INTERNAL COMBUSTION ENGINE**
KRAFTSTOFFVENTIL ZUM EINSPRITZEN VON KRAFTSTOFF IN EINE BRENNKAMMER EINES GROSSEN SELBSTZÜNDENDEN AUFGELADENEN ZWEITAKTVERBRENNUNGSMOTORS
SOUPAPE DE CARBURANT POUR INJECTER DU CARBURANT DANS UNE CHAMBRE DE COMBUSTION À AUTO-ALLUMAGE D'UN GROS MOTEUR À COMBUSTION INTERNE À DEUX TEMPS À TURBOCOMPRESSEUR

(30) Priority: 20.03.2015 DK 201500169
(43) Date of publication of application: 21.09.2016
(73) Proprietor: MAN Energy Solutions, filial af MAN Energy Solutions SE, Tyskland, 2450 Copenhagen SV (DK)
(72) Inventor: Hagen, Peter, DK-2791 Dragoer (DK)
(74) Representative: Nordic Patent Service A/S

(56) References cited:
- EP-A1- 0 728 941
- US-A- 5 383 647
- US-A- 5 460 329

## Description

### FIELD

The present invention relates to a fuel valve for injecting liquid fuel into the combustion chamber of a large low-speed uniflow turbocharged two-stroke internal combustion engine.

### BACKGROUND ART

Large low-speed turbocharged two-stroke self-igniting engines of the crosshead type are typically used in propulsion systems of large ships or as prime mover in power plants. Very often, these engines are operated with heavy fuel oil.

Recently, there has been a demand for large turbocharged two-stroke self-igniting engines to be able to handle alternative types of fuel, such as gas, methanol, coal slurry, petroleum coke and the like. One group of fuels that is in increasing demand are low flashpoint fuels.

Many low flashpoint fuels, such as methanol, LPG, DME or biofuel are relatively clean fuels that result in significantly lower levels of sulfurous components, NOx and CO2 in the exhaust gas when used as fuel for a large low-speed uniflow turbocharged two-stroke internal combustion engine when compared with e.g. using heavy fuel oil as fuel.

However, there are problems associated with using a low flashpoint fuels in a large low-speed uniflow turbocharged two-stroke internal combustion engine. One of those problems is the low flashpoint, which causes significant problems if low flashpoint fuel leaks into one of the other systems of the engine and mixes with another fluid, such as e.g. the lubrication oil system. Low flashpoint fuel, is inherently easy to ignite and papers thereof can easily form explosive mixtures. Thus, should low flashpoint find its way into another system of the engine it is necessary to stop the engine operation for safety reasons and to clean or replace all of the liquid in such a system, a costly and cumbersome affair for the operator of the engine.

The construction of known fuel valves, always has leakage from the shaft of the valve needle and the bore in which the shaft is guided, due to the design of the needle and seat. Therefore, a supply of pressurized sealing liquid 'sealing oil' is applied to the clearance between the shaft and the bore, both for sealing purposes, but also for lubrication purposes. In order to keep leakage to a minimum the clearance is kept as small as possible with very narrow tolerances in such a small clearance requires lubrication between the shaft and the bore.

A system error is caused in case fuel is mixed with sealing oil. Separation of sealing oil and fuel is difficult and therefore there is a serious problem if this happens.

Detection of fuel in the lubrication oil system will result of shut down of the engine, and it is often difficult to trouble shoot the root cause.

Another safety related issue is the requirement by the ship classification societies that low flashpoint fuels are not allowed to remain in the fuel valves and the tubing leading to the fuel valves when the engine is not operated on the low flashpoint fuel, e.g. when the engine is a dual fuel engine and is operated on the other of the two fuels, i.e. a high flashpoint fuel. Thus, provisions have to be made for purging the fuel valves and the tubing leading to the fuel valves.

Another challenge of these low flashpoint fuels is their relatively poor lubrication properties, which prevents the use of very small clearances between moving parts without applying a lubrication liquid.

Large low-speed uniflow turbocharged two-stroke internal combustion engines are typically used for the propulsion of large ocean going cargo ships and reliability is therefore of the utmost importance. Low flashpoint fuel operation of these engines is still a relatively recent development and reliability of the operation with low flash point fuel has not yet reached the level of conventional fuel. Therefore, most large low-speed two-stroke self-igniting internal combustion engines are dual fuel engines with a fuel system for operation on low flashpoint fuel and a fuel system for operation with fuel oil so that they can be operated at full power running on fuel oil only.

Due to the large diameter of the combustion chamber of these engines are typically provided with three fuel injection valves per cylinder, separated by an angle of approximately 120° around the central exhaust valve. Thus, with a dual fuel system there will be three low flashpoint fuel valves per cylinder and three fuel oil valves per cylinder and thus, the top cover of the cylinder is a crowded place.

US 5,460,329 discloses a fuel valve for a four-stroke diesel engine which has a double solenoid three-way or four-way spool valve that controls the flow of a working fluid that is used to move an intensifier piston of the injector. The fuel valve is provided with a needle with a conical tip that rests on the conical interior of the tip of the nozzle to prevent flow of fuel to the nozzle. The nozzle holes are arranged in the conical tip of the nozzle. This arrangement of nozzle holes in the tip of the nozzle is not suitable for use in a large slow running two-stroke self-igniting turbocharged internal combustion engine.

US5460329 discloses a fuel valve for injecting liquid fuel into a combustion chamber of an internal combustion engine, the fuel valve comprises an elongated fuel valve housing with a rear end and a front end, a nozzle with a hollow interior that forms a chamber and with nozzle holes in the tip of the nozzle, the nozzle is arranged at the front end of the fuel valve housing, a fuel inlet port in the elongated fuel valve housing for connection to a source of pressurized liquid fuel, an actuation liquid port in the elongated fuel valve housing, a pump piston received in a first bore in the elongated fuel valve housing with a pump chamber in the first bore on one side of the pump piston, an actuation piston received in a second bore in the valve housing with an actuation chamber in the second bore on one side of the actuation piston, the pump piston being connected to the actuation piston to move in unison therewith, the actuation chamber being connected to the actuation liquid port, a valve member with an axially displaceable shaft that is received in a longitudinal bore in the elongated valve housing, the valve member having a closed position and an open position, the axially displaceable shaft is provided with a closure member that rests on a valve seat in the closed position, the closure member has lift from the valve seat in the open position and the axially displaceable shaft being resiliently biased towards the closed position by a spring, a conduit is provided between the pump chamber and the valve seat.

### DISCLOSURE

On this background, it is an object of the present application to provide a fuel valve for a large turbocharged self-igniting two-stroke internal combustion engine that overcomes or at least reduces the problems indicated above.

This object is achieved according to a first aspect by providing a fuel valve according to claim 1.

The fuel valve according to claim 1 differs from the fuel valve disclosed in US 5,460,329 in that:
- the nozzle has a closed tip,
- the valve seat faces the chamber in the nozzle,
- the closure member is at least partially disposed in the chamber in the nozzle,
- the closure member is configured to move towards the closed tip to obtain lift,
- the closure member is configured to move away from the closed tip when the closure member moves towards the valve seat.

By providing a fuel valve with a closure member inside the nozzle that cooperates with an outwardly facing valve seat, i.e. a closure member that opens by moving away from the fuel valve housing and closes by moving towards the valve housing a fuel valve construction can be realized without any leakage via the clearance between the axially displaceable shaft of the valve member and the longitudinal bore in which it is received. By not having leakage from the clearance between the axially displaceable shaft and the longitudinal bore, it is not necessary to seal the clearance against low flashpoint fuel with a sealing liquid, and thereby it becomes possible to simplify the entire fuel injection system since the system for providing a sealing liquid to the clearance between the bore and the shaft of the valve member can be omitted. Further, since it is not necessary to seal the clearance against the low flashpoint fuel, the clearance can be dimensioned relatively large and such a larger clearance does not require lubrication fluid to the present. Thus, the provision of the lubrication liquid supply system to the bore of the shaft of the valve member can be omitted.

In a first possible implementation of the first aspect the longitudinal bore extends to the valve seat, and a clearance between the axially displaceable shaft and the longitudinal bore provides a portion of the conduit between the pump chamber and the valve seat. Hereby, a leak free conduit between the pump chamber and the valve seat can be achieved.

In a second possible implementation of the first aspect the clearance between the axially displaceable shaft and the longitudinal bore comprises a longitudinal groove in the axially displaceable shaft.

In a third possible implementation of the first aspect the conduit between the pump chamber and the valve seat comprises one or more reduced diameter sections in the axially displaceable shaft.

In a fourth possible implementation of the first aspect the conduit between the pump chamber and the valve seat comprises one or more channels or bores in the elongated valve housing that extends from the pump chamber to the longitudinal bore.

In a fifth possible implementation of the first aspect the valve member is configured to open against the bias when the pressure of the fuel in the pump chamber in exceeds a predetermined threshold.

In a sixth possible implementation of the first aspect the pump chamber has an outlet connected to the at least on channel or bore and an inlet connected to the fuel inlet port, preferably via a non-return valve in the elongated fuel valve housing that prevents flow from the pump chamber to the fuel inlet port.

In a seven possible implementation of the first aspect the fuel valve further comprises a sealing oil inlet port for connection to a source of pressurized sealing oil and a conduit extending from the sealing oil inlet port to the first bore for sealing the pump piston in the first bore.

In an eighth possible implementation of the first aspect the diameter of the axially movable valve stem is smaller than the diameter of the longitudinal bore by a margin that ensures that the axially movable valve stem can move inside the longitudinal bore with fuel, such as e.g. low flashpoint fuel with poor lubrication properties, filling the clearance between the axially movable valve stem and the longitudinal bore.

In a ninth possible implementation of the first aspect the spring is a helical wire spring that is received in a spring chamber in the elongated fuel valve housing, the spring chamber opening only to the longitudinal bore and the spring chamber being in fluidic connection to the at least on bore or channel via a clearance between the axially movable shaft and the longitudinal bore, the clearance preferably comprising a longitudinal groove in the axially movable shaft.

The object above is also achieved according to a second aspect by providing a large slow running two-stroke turbocharged self-igniting internal combustion engine with a fuel valve according to the first aspect and any one of its implementations.

In a first possible implementation of the second aspect the engine the conduit leading to the fuel inlet port comprises double wall piping, with the low flashpoint fuel being transported in an inner lumen and with an outer lumen being vented and connected to a sensor for detection of hydrocarbons.

Further objects, features, advantages and properties of the fuel valve and engine according to the present disclosure will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a front view of a large two-stroke diesel engine according to an example embodiment,
Fig. 2 is a side view of the large two-stroke engine of Fig. 1,
Fig. 3 is a diagrammatic representation the large two-stroke engine according to Fig. 1, and
Fig. 4 is a diagrammatic representation of an example embodiment of low flashpoint liquid fuel system of the engine of Fig. 1 for one fuel valve,
Fig. 5 is a sectional view in diagrammatic representation of an example embodiment of low flashpoint liquid fuel system of the engine of Fig. 1 of the upper part of a cylinder,
Fig. 6 is a sectional view of a gaseous fuel injection valve for use in the engine shown in Fig. 1 according to an example embodiment,
Fig. 7 is a detailed view of a section of Fig. 6, with the with the valve member in the seated (closed) position and
Fig. 8 is detailed view of the section of Fig. 6 showing the tip of the nozzle with the valve member in the lifted (open) position.

### DETAILED DESCRIPTION

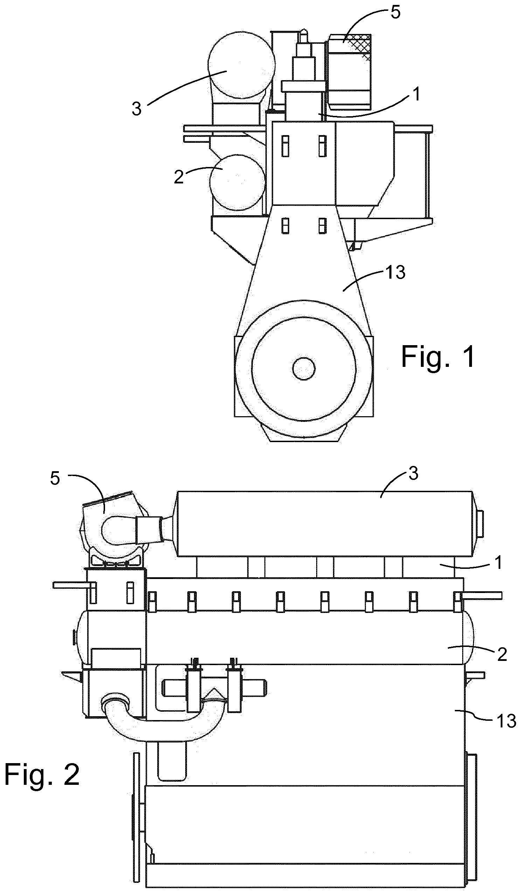

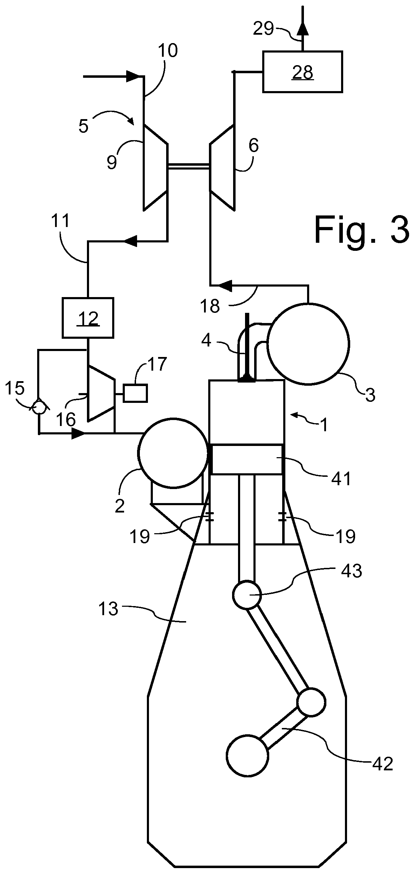

In the following detailed description, the self-igniting internal combustion engine will be described with reference to a large two-stroke low-speed turbocharged internal combustion (Diesel) engine in the example embodiments. Figs. 1, 2 and 3 show a large low-speed turbocharged two-stroke diesel engine with a crankshaft 42 and crossheads 43. Fig. 3 shows a diagrammatic representation of a large low-speed turbocharged two-stroke diesel engine with its intake and exhaust systems. In this example embodiment the engine has four cylinders 1 in line. Large low-speed turbocharged two-stroke diesel engines have typically between four and fourteen cylinders in line, carried by an engine frame 13. The engine may e.g. be used as the main engine in an ocean going vessel or as a stationary engine for operating a generator in a power station. The total output of the engine may, for example, range from 1,000 to 110,000 kW.

The engine is in this example embodiment a diesel (self-igniting) engine of the two-stroke uniflow type with scavenge ports 19 at the lower region of the cylinders 1 and a central exhaust valve 4 at the top of the cylinders 1. The scavenge air is passed from the scavenge air receiver 2 to the scavenge ports 19 of the individual cylinders 1. A piston 41 in the cylinder 1 compresses the scavenge air, fuel is injected from fuel injection valves (described in detail further below), in the cylinder cover (described in detail further below), combustion follows and exhaust gas is generated. When an exhaust valve 4 is opened, the exhaust gas flows through an exhaust duct associated with the cylinder 1 into the exhaust gas receiver 3 and onwards through a first exhaust conduit 18 to a turbine 6 of the turbocharger 5, from which the exhaust gas flows away through a second exhaust conduit via an economizer 28 to an outlet 29 and into the atmosphere. Through a shaft, the turbine 6 drives a compressor 9 supplied with fresh air via an air inlet 10. The compressor 9 delivers pressurized scavenge air to a scavenge air conduit 11 leading to the scavenge air receiver 2.

The scavenge air in conduit 11 passes an intercooler 12 for cooling the scavenge air. In an example embodiment the scavenge air leaves the compressor at approximately 200 °C and is cooled to a temperature between 36 and 80 °C by the intercooler.

The cooled scavenge air passes via an auxiliary blower 16 driven by an electric motor 17 that pressurizes the scavenge air flow when the compressor 9 of the turbocharger 5 does not deliver sufficient pressure for the scavenge air receiver 2, i.e. in low or partial load conditions of the engine. At higher engine loads the turbocharger compressor 9 delivers sufficient compressed scavenge air and then the auxiliary blower 16 is bypassed via a non-return valve 15.

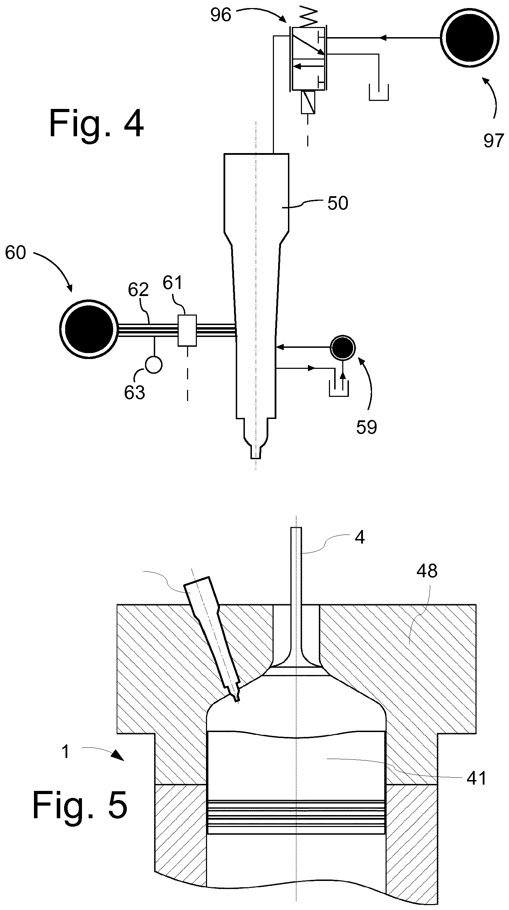

Fig. 4 is a diagrammatic representation of a fuel valve 50 with its connections to the source of low flashpoint liquid fuel 60, to the source of cooling liquid (oil) 59 and to a source of actuation liquid (oil) 97 and an actuation liquid control valve 96. A conduit 62 leads from the source of pressurized low flashpoint liquid fuel 62 to the inlet port in the housing of the low flashpoint liquid fuel valve 50. Conduit 62 is a double walled conduit, e.g. formed by concentric tubes or by a tube inside a solid block material such as the cylinder cover 48. The low flashpoint liquid fuel is transported in the inner lumen/tube and the outer lumen is vented and provided with a sensor 63 for detecting volatile hydrocarbon components (sniffer). The sensor 63 is connected to an electronic control unit that issues an alarm when volatile hydrocarbon components are detected by the sensor 63. A window valve 61 is provided in the conduit 62 for being able to disconnect the fuel valve 50 from the source of low flashpoint liquid fuel 60 for being able to purge the fuel valve 50 from the low flashpoint fuel. The window valve 61 is preferably electronically operated and controlled by the electronic control unit.

Fig. 5 shows the top of one of the plurality of cylinders 1 according to an example embodiment. The top cover 48 of the cylinders 1 is provided with a number (typically 2 or 3) of fuel valves 50 for injecting a low flashpoint liquid fuel from a nozzle of the fuel valves 50, into the combustion chamber above the piston 41 in the cylinder 1. In this example embodiment the engine has three fuel valves 50 per cylinder, but it should be understood that a single or two gaseous fuel valves 50 may be sufficient, depending on the size of the combustion chamber. The exhaust valve 4 is placed centrally in the top cover with the low flashpoint liquid fuel valves 50 closer to the cylinder wall.

In an embodiment (not shown), two or three fuel oil valves can be provided in the top cover 48 for operation of the engine on fuel oil. The fuel oil valves are connected to a source of high pressure fuel oil in a well-known manner.

The forward portion of the fuel valve 50 that is closest to the nozzle and closest to the combustion chamber is cooled using a cooling liquid, such as cooling oil, for which system oil (lubrication oil) can be used. Hereto, the body of the fuel valve 50 is provided with a cooling liquid inlet port and a cooling liquid outlet port and a flow path (not shown) between the in the port and the outlet port through the forward portion of the body of the fuel valve 50. The cooling liquid inlet port is connected via a conduit to a source of pressurized cooling liquid 59, such as system oil, and the cooling liquid outlet port is connected via a conduit to a reservoir of cooling liquid.

The body of the fuel valve 50 is also provided with a actuation liquid port for controlling the opening and closing of the fuel valve. The control port is connected via a conduit to the source of pressurized actuation liquid 97. An electronically controlled control valve 96, preferably a proportional valve, is placed in the conduit between the source of pressurized actuation liquid 97 and the actuation liquid port for controlling the opening and closing of the fuel valve 50.

The engine is provided with an electronic control unit that controls the operation of the engine. Signal lines connect the electronic control unit to the control valve 96 and to the window valves 61.

The electronic control unit is configured to time the injection events of the fuel valve 50 correctly and to control the dosage (volume injected per injection event) of the low flashpoint liquid fuel with the fuel valves 50. The electronic control unit is in an embodiment configured to control the shape of the injection curve (rate shaping), since the fuel valve is capable of adapting to such curves.

The electronic control unit opens and closes the window valve 61 so as to ensure that the supply conduit 62 is filled with pressurized low flashpoint liquid fuel before the start of a fuel injection.

The window valve 61 is closed by the electronic control unit when the fuel valve 50 needs to be purged from low flashpoint fuel. A purging arrangement is provided to allow flow from the pump chamber 82 to fuel supply conduit 62. In an embodiment, the non-return valve 74 (suction valve) is provided with a controllable override to keep the non-return valve open during purging to allow the fluid in the pump chamber 82 to be purged via the conduit 76 and the suction valve 74 into the fuel supply conduit 62.

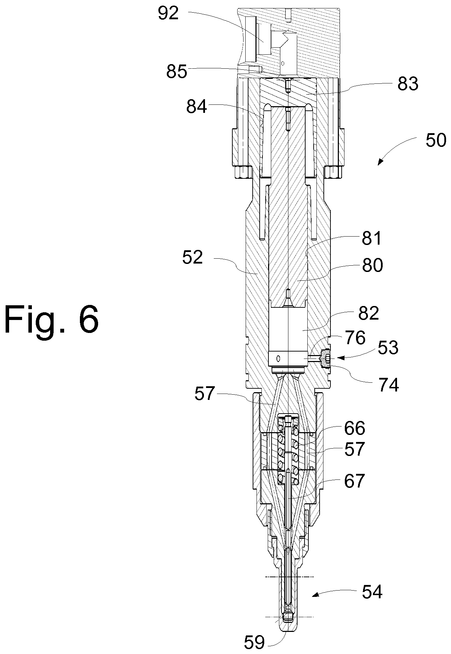

Figs. 6,7 and 8 show sectional views of a fuel valve 50 for injecting low flashpoint fuel into the combustion chamber of a self-igniting internal combustion engine. The fuel valve 50 has an elongated valve housing 52 with a rearmost end and a nozzle 54 at its front end. The nozzle 54 is s separate body that is attached to the front end of the valve housing 52. The rearmost end of the valve housing 52 is provided with a plurality of ports, including an actuation liquid port 92 and a gas leak detection port. The rearmost end is enlarged to form a head that is provided with bores (not shown) for receiving bolts (not shown) that secure the fuel valve 50 to the cylinder cover 48. In the present embodiment, the fuel valves are placed around the central exhaust valve 4, i.e. relatively close to the wall of the cylinder liner. The elongated valve housing 52 and the other components of the fuel injection valve 50, as well as the nozzle are in embodiment made of steel, such as e.g. tool steel stainless steel.

The hollow nozzle 54 is provided with nozzle holes 56 that are connected to a chamber 55 in the hollow interior of the nozzle and the nozzle holes 56 are distributed radially over the nozzle 54. The nozzles are axially close to the tip 59 and the radial distribution of the nozzle holes 56 is in the present embodiment over a relatively narrow range of approximately 50°. The radial orientation of the nozzle holes 56 as illustrated by axis Z is such that the nozzles holes 56 are directed away from the wall of the cylinder liner. Further, the nozzle holes 56 are directed such that they are roughly in the same direction as the direction of the swirl of the scavenge air in the combustion chamber caused by the configuration of the scavenge ports (this swirl is a well-known feature of large two-stroke turbocharged internal combustion engines of the journey flow type).

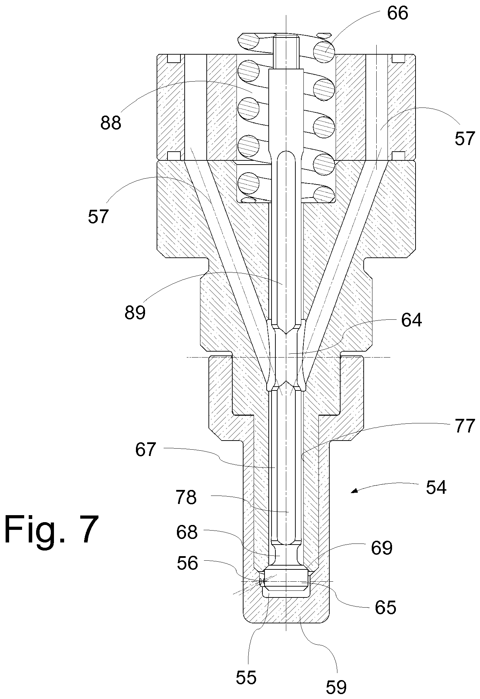

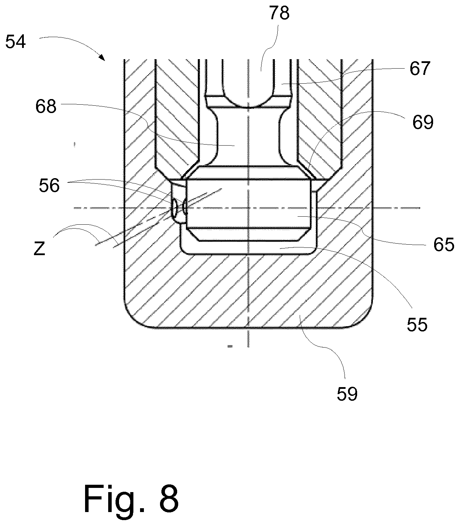

The tip 59 of the nozzle 54 (Figs. 7&8) is closed. The nozzle 54 is connected to the front end of the valve housing 52 with a chamber 55 in the nozzle 54 that openings towards a longitudinal bore 77 in the housing 52. A valve seat 69 is disposed at the transition between the longitudinal bore 77 and the chamber 55.

A valve member with an axially displaceable shaft 67 that is slidably received with a substantial clearance in the longitudinal bore 77 in the elongated valve housing 52, so that lubrication between the axially displaceable shaft 67 and the longitudinal bore 77 is not critical. The valve member has a closed position and an open position. Fig. 7 shows the closed position and figure 8 shows the open position.

The axially displaceable shaft 67 is provided at its front end with a closure member 65, such as e.g. a head, that rests on a valve seat 69 in the closed position. The closure member 65 has lift from the valve seat 69 in the open position and the axially displaceable shaft 67 is resiliently biased towards the closed position by a pre-tensioned spring 66. The pre-tensioned helical spring 66 acts on the axially displaceable shaft 67 and biases valve member towards its closed position where the closure member 65 rest on the seat 69.

The helical spring 66 is a helical wire spring that is received in a spring chamber 88 in the elongated fuel valve housing 52. The spring chamber 88 opens only to the longitudinal bore 77 and the spring chamber is in fluidic connection to the channel 57 via a clearance between the axially movable shaft 67 and the longitudinal bore 77. The clearance preferably includes a longitudinal groove 89 in the axially movable shaft 67.

One end of the helical spring 66 engages an end of the spring chamber 88 and the other end of the helical spring 66 engages a widened section or flange at the rear end of axially displaceable shaft 67.

The elongated valve housing 52 is provided with a fuel inlet port 53 for connection to a source of pressurized low flashpoint liquid fuel 60, for example via the low flashpoint liquid fuel supply conduit 62. The fuel inlet port 53 connects to a pump chamber 82 in the valve housing 52 via a conduit 76. A non-return valve 74 (suction valve) is provided in conduit 76, i.e. in the valve housing 52 or upstream of the fuel inlet port 53, i.e. outside the valve housing 52. The non-return valve 74 ensures that liquid low flashpoint fuel can flow through the conduit 76 to the pump chamber 82, but not in the opposite direction.

A pump piston 80 is slidably and sealingly received in a first bore 81 in the elongated fuel valve housing 52 with the pump chamber 82 in the first bore 81 on one side of the pump piston 80. An actuation piston 83 is slidably and sealingly received in a second bore 84 in the valve housing 52 with an actuation chamber 85 in the second bore 84 on one side of the actuation piston 83. The pump piston 80 is connected to the actuation piston 83 to move in unison therewith, i.e. the pump piston 80 and the actuation piston 83 can slide in unison their respective bores 81,84. In the present embodiment the pump piston 80 and the actuation piston 83 performed by a single body, however, it is noted that the pump piston 80 and the actuation piston 83 can be separate interconnected bodies. The actuation chamber 85 is fluidically connected to an actuation liquid port 92. The electronic control valve 96 controls the flow pressurized actuation liquid to and from the actuation liquid port 92 and thereby to and from to the actuation chamber 85.

At the start of injection event, the electronic control unit commands the electronic control valve 96 to allow actuation liquid into the actuation chamber 85. The pressurized actuation liquid in the actuation chamber 85 acts on the actuation piston 83, thereby creating a force that urges the pump piston 81 into the pump chamber 82. Thereby the pressure of the low flashpoint liquid fuel in the pump chamber 82 increases. In embodiment the diameter of the actuation piston is larger than the diameter of the pump piston and thus the pressure in the pump chamber 82 will be correspondingly higher than the pressure in the actuation chamber 85 and the combination of the actuation piston 83 and pump piston 80 acts as a pressure booster.

One or more channels (conduits) 57 fluidically connect the pump chamber 82 to the axial bore 77 and thereby to the valve seat 69. The valve seat 69 faces the chamber 55 in the nozzle 54, and the closure member 65 is at least partially disposed in the chamber 55. The closure member 65 is configured to move towards the closed tip 59 to obtain lift, i.e. into the chamber 55 and away from, the valve housing 52. In its open position the valve member has lift from the seat 69 thereby allowing flow from the pump chamber 82 to the chamber 55 in the nozzle 54. The valve member gets lift when the pressure of the low flashpoint liquid fuel in the pump chamber exceeds the force of the helical spring 66. Thus, the valve member is configured to open against the bias of the spring 66 when the pressure of the fuel in the pump chamber 82 in exceeds a predetermined threshold. The pressure in the fuel is caused by the pump piston 80 acting on the low flashpoint liquid fuel in the pump chamber 82.

The closure member 65 is configured to move away from the closed tip 59, i.e. towards the valve housing 52 when the closure member 65 moves towards the valve seat 69. This happens when the pressure in the low flashpoint liquid fuel decreases when the pump piston 80 no longer acts on the fuel in the pump chamber 82 and the closing force of the helical spring 66 on the valve member becomes larger than the opening force of the low flashpoint liquid fuel on the valve member.

When the electronic control unit ends an injection event it commands the control valve 96 to connect the actuation chamber 85 to tank. The pump chamber 82 is connected to the pressurized source of low flashpoint liquid fuel 60 and the supply pressure of the low flashpoint liquid fuel that flows in via the non-return valve 74 will urge actuation piston 83 into the actuation chamber 85 until it has reached the position that is shown in Fig. 6 with the pump chamber 82 completely filled with low flashpoint liquid fuel so that the fuel valve 50 is ready for the next injection event.

The longitudinal bore 77 extends to the valve seat 69 and a clearance between the axially displaceable shaft 67 and the longitudinal bore 77 provides a portion of the conduit between the pump chamber 82 and the valve seat 69. A longitudinal groove 78 in the axially displaceable shaft 67 can be used to increase the clearance between the original bore 77 and the axially displaceable shaft 67, thereby providing larger cross-sectional area for transporting the low flashpoint liquid fuel from the channels 57 to the valve seat 69. The axially movable shaft may also be provided with a reduced diameter section 64 at a position where it meets the end of the channels 57 in order to improve flow conditions for the low flashpoint liquid fuel.

The longitudinal bore 77 also extends to the spring chamber 88 and a longitudinal groove 89 be provided in the actually displaceable shaft 67 for providing fluid communication to the spring chamber 88.

A reduced diameter section 68 may be provided at the end of the axially displaceable shaft 66 where it connects to the closure member 65 to ensure easy and proper flow of the low flashpoint fuel from the longitudinal bore 77 into the chamber 55. The low flashpoint liquid fuel leaves the chamber 55 via the nozzle holes 56.

An injection event of the gaseous fuel is controlled by the electronic control unit ECU through the length of the activation timing and the length of the stroke of the pump piston 80 (rate shaping). The amount of low flashpoint liquid fuel injected in one injection event is determined by the length of the stroke of the pump piston 80. Thus, upon a signal from the electronic control unit the activation oil pressure is raised in the activation chamber 85.

At the end of the injection event the ECU removes the pressure from the actuation chamber 85 and the force of the pressurized low flashpoint liquid fuel in the pump chamber 82 causes the actuation piston 83 to be pushed back in the second bore 85 until it hits the end of the second bore 85 and the pump chamber 82 is completely filled with low flashpoint liquid fuel and the fuel valve 50 is ready for the next injection event.

Preferably, the diameter of the axially movable valve stem 67 is smaller than the diameter of the longitudinal bore 77 by a margin that ensures that the axially movable valve stem 67 can move inside the longitudinal bore with low flashpoint fuel, preferably low flashpoint fuel with poor lubrication properties, filling the clearance between the axially movable valve stem 67 and the longitudinal bore 77.

In an embodiment, the clearance between the pump piston 80 and the bore 81 can be provided with sealing oil to prevent ingress of fuel. This embodiment is particularly relevant if the fuel is a low flashpoint fuel.

In an embodiment the fuel valve is provided with a sealing oil inlet port for connection to a source of pressurized sealing liquid and provided with a conduit extending from the sealing liquid inlet port to that first bore 81 for sealing the pump piston 80 in the first bore 78.

Although the fuel valve herein has been disclosed as particularly relevant for injecting a fuel with a low flashpoint, it should be understood that the fuel valve disclosed herein is equally suitable for other liquid fuels that do not have a low flashpoint such as e.g. heavy fuel oil.

The term "comprising" as used in the claims does not exclude other elements or steps. The term "a" or "an" as used in the claims does not exclude a plurality. The electronic control unit may fulfill the functions of several means recited in the claims. The reference signs used in the claims shall not be construed as limiting the scope. Although the present invention has been described in detail for purpose of illustration, it is understood that such detail is solely for that purpose, and variations can be made therein by those skilled in the art without departing from the scope of the invention as defined by the appended claims.

## Claims

1. A fuel valve (50) for injecting liquid fuel into the combustion chamber of a large slow running two-stroke turbocharged self-igniting internal combustion engine, said fuel valve (50) comprising:
an elongated fuel valve housing (52) with a rear end and a front end,
a nozzle (54) with a closed tip (59) and with a hollow interior that forms a chamber (55) connected to nozzle holes (56), said nozzle (54) being arranged at the front end of said fuel valve housing (52),
a fuel inlet port (53) in said elongated fuel valve housing (52) for connection to a source (60) of pressurized liquid fuel,
an actuation liquid port (92) in said elongated fuel valve housing (52)
a pump piston (80) received in a first bore (81) in said elongated fuel valve housing (52) with a pump chamber (82) in said first bore (81) on one side of said pump piston (80),
an actuation piston (83) received in a second bore (84) in said valve housing (52) with an actuation chamber (85) in said second bore (84) on one side of said actuation piston (83),
said pump piston (80) being connected to said actuation piston (83) to move in unison therewith,
said actuation chamber (85) being connected to said actuation liquid port (92),
a valve member with an axially displaceable shaft (67) that is received in a longitudinal bore (77) in said elongated valve housing (52), said valve member having a closed position and an open position,
said axially displaceable shaft (67) is provided with a closure member (65) that rests on a valve seat (69) in said closed position, said closure member (65) has lift from said valve seat (69) in said open position and said axially displaceable shaft (67) being resiliently biased towards said closed position by a spring (66),
a conduit (57) is provided between said pump chamber (82) and said valve seat (69),
said valve seat faces said chamber (55) in said nozzle (54),
said closure member (65) is at least partially disposed in said chamber (55) in said nozzle (54),
said closure member (65) is configured to move towards said closed tip (59) to obtain lift, and
said closure member (65) is configured to move away from said closed tip (59) when said closure member (65) moves towards said valve seat (69).

2. A fuel valve according to claim 1, wherein said longitudinal bore (77) extends to said valve seat (69), and wherein a clearance between said axially displaceable shaft (67) and said longitudinal bore (77) provides a portion of said conduit between said pump chamber (82) and said valve seat (69).

3. A fuel valve according to claim 1, wherein said clearance between said axially displaceable shaft (67) and said longitudinal bore (77) comprises a longitudinal groove (78) in said axially displaceable shaft (67).

4. A fuel valve according to any one of claims 1 to 3, wherein said conduit between said pump chamber (82) and said valve seat (69) comprises one or more reduced diameter sections (64,68) in said axially displaceable shaft (67).

5. A fuel valve according to any one of claims 1 to 4, wherein said conduit between said pump chamber (82) and said valve seat (69) comprises one or more channels or bores (57) in said elongated valve housing (52) that extends from said pump chamber (82) to said longitudinal bore (77).

6. A fuel valve according to any one of claims 1 to 4, wherein said valve member is configured to open against said bias when the pressure of the fuel in said pump chamber (82) exceeds a predetermined threshold.

7. A fuel valve according to any one of claims 1 to 6, wherein said pump chamber (82) has an outlet connected to said at least one channel or bore (57) and an inlet connected to said fuel inlet port (53), preferably via a non-return valve (74) in said elongated fuel valve housing (52) that prevents flow from said pump chamber (82) to said fuel inlet port (53).

8. A fuel valve according to any one of claims 1 to 7, wherein the diameter of said axially movable shaft (67) is smaller than the diameter of said longitudinal bore (77) by a margin that ensures that said axially movable shaft (67) can move inside said longitudinal bore with low flashpoint fuel, preferably low flashpoint fuel with poor lubrication properties, filling the clearance between said axially movable shaft (67) and the longitudinal bore (77).

9. A fuel valve (50) according to any one of claims 1 to 8, wherein said spring (66) is a helical wire spring that is received in a spring chamber (88) in said elongated fuel valve housing (52), said spring chamber (88) opening only to said longitudinal bore (77) and said spring chamber being in fluidic connection to said at least one bore or channel (57) via a clearance between said axially movable shaft (67) and said longitudinal bore (77), said clearance preferably comprising a longitudinal groove (89) in said axially movable shaft (67).

10. A fuel valve (50) according to according to any of claims 1 to 9, further comprising a cooling liquid inlet port and a cooling liquid outlet port and a cooling liquid flow path for cooling the fuel injection valve (50), in particular the portion of the fuel valve (50) closest to said front end.

11. A fuel valve according to any one of claims 1 to 10, further comprising means to selectively allow flow from said pump chamber (82) to said fuel inlet port (53) for purging said fuel valve (50).

12. A large slow running two-stroke turbocharged self-igniting internal combustion engine (1) with a fuel valve (50) according to any of the preceding claims.

13. An engine according to claim 12, wherein the conduit (62) leading to said fuel inlet port (53) comprises double wall piping, with the low flashpoint fuel being transported in an inner lumen and with an outer lumen being vented and connected to a sensor (63) for detection of volatile hydrocarbons.

## Patentansprüche

1. Kraftstoffventil (50) zum Einspritzen von flüssigem Kraftstoff in die Brennkammer eines großen langsam laufenden Zweitakt-Turbolader-Selbstzündungs-Verbrennungsmotors, wobei das Kraftstoffventil (50) umfasst:
ein längliches Kraftstoffventilgehäuse (52) mit einem hinteren Ende und einem vorderen Ende,
eine Düse (54) mit einer geschlossenen Spitze (59) und mit einem hohlen Innenraum, der eine mit Düsenlöchern (56) verbundene Kammer (55) bildet, wobei die Düse (54) am vorderen Ende des Kraftstoffventilgehäuses (52) angeordnet ist,
eine Kraftstoffeinlassöffnung (53) im länglichen Kraftstoffventilgehäuse (52) zur Verbindung mit einer Quelle (60) von unter Druck stehendem Flüssigkraftstoff, eine Betätigungsflüssigkeitsöffnung (92) im länglichen Kraftstoffventilgehäuse (52)
einen Pumpenkolben (80), der in einer ersten Bohrung (81) im länglichen Kraftstoffventilgehäuse (52) aufgenommen ist, mit einer Pumpenkammer (82) in der ersten Bohrung (81) auf einer Seite des Pumpenkolbens (80),
einen Betätigungskolben (83), der in einer zweiten Bohrung (84) im Ventilgehäuse (52) aufgenommen ist, mit einer Betätigungskammer (85) in der zweiten Bohrung (84) auf einer Seite des Betätigungskolbens (83),
wobei der Pumpenkolben (80) mit dem Betätigungskolben (83) verbunden ist, um sich gemeinsam mit diesem zu bewegen,
wobei die Betätigungskammer (85) mit dem Betätigungsflüssigkeitsanschluss (92) verbunden ist,
ein Ventilelement mit einem axial verschiebbaren Schaft (67), der in einer Längsbohrung (77) im länglichen Ventilgehäuse (52) aufgenommen ist, wobei das Ventilelement eine geschlossene Stellung und eine offene Stellung aufweist,
der axial verschiebbare Schaft (67) mit einem Verschlusselement (65) versehen ist, das in der geschlossenen Position auf einem Ventilsitz (69) ruht, wobei das Verschlusselement (65) in der offenen Position eine Abhebung von dem Ventilsitz (69) aufweist und der axial verschiebbare Schaft (67) durch eine Feder (66) elastisch in Richtung auf die geschlossene Position vorgespannt ist,
eine Leitung (57) zwischen der Pumpenkammer (82) und dem Ventilsitz (69) vorgesehen ist,
der Ventilsitz der Kammer (55) in der Düse (54) zugewandt ist,
das Verschlusselement (65) zumindest teilweise in der Kammer (55) in der Düse (54) angeordnet ist,
das Verschlusselement (65) so ausgelegt ist, dass es sich zur geschlossenen Spitze (59) hin bewegt, um einen Hebevorgang zu erreichen, und
das Verschlusselement (65) so ausgelegt ist, dass es sich von der geschlossenen Spitze (59) weg bewegt, wenn sich das Verschlusselement (65) in Richtung des Ventilsitzes (69) bewegt.

2. Kraftstoffventil nach Anspruch 1, wobei sich die Längsbohrung (77) bis zum Ventilsitz (69) erstreckt, und wobei ein Spiel zwischen dem axial verschiebbaren Schaft (67) und der Längsbohrung (77) einen Teil der Leitung zwischen der Pumpenkammer (82) und dem Ventilsitz (69) bildet.

3. Kraftstoffventil nach Anspruch 1, wobei das Spiel zwischen dem axial verschiebbaren Schaft (67) und der Längsbohrung (77) eine Längsnut (78) im axial verschiebbaren Schaft (67) aufweist.

4. Kraftstoffventil nach einem der Ansprüche 1 bis 3, wobei die Leitung zwischen der Pumpenkammer (82) und dem Ventilsitz (69) einen oder mehrere Abschnitte (64, 68) mit reduziertem Durchmesser im axial verschiebbaren Schaft (67) aufweist.

5. Kraftstoffventil nach einem der Ansprüche 1 bis 4, wobei die Leitung zwischen der Pumpenkammer (82) und dem Ventilsitz (69) einen oder mehrere Kanäle oder Bohrungen (57) im länglichen Ventilgehäuse (52) aufweist, das sich von der Pumpenkammer (82) zur Längsbohrung (77) erstreckt.

6. Kraftstoffventil nach einem der Ansprüche 1 bis 4, wobei das Ventilelement so ausgelegt ist, dass es sich gegen die Vorspannung öffnet, wenn der Druck des Kraftstoffs in der Pumpenkammer (82) einen vorbestimmten Schwellwert überschreitet.

7. Kraftstoffventil nach einem der Ansprüche 1 bis 6, wobei die Pumpenkammer (82) einen Auslass, der mit dem mindestens einen Kanal oder der mindestens einen Bohrung (57) verbunden ist, und einen Einlass aufweist, der mit der Kraftstoffeinlassöffnung (53) verbunden ist, vorzugsweise über ein Rückschlagventil (74) im länglichen Kraftstoffventilgehäuse (52), das eine Strömung von der Pumpenkammer (82) zur Kraftstoffeinlassöffnung (53) verhindert.

8. Kraftstoffventil nach einem der Ansprüche 1 bis 7, wobei der Durchmesser des axial beweglichen Schafts (67) um einen Betrag kleiner als der Durchmesser der Längsbohrung (77) ist, der sicherstellt, dass sich der axial bewegliche Schaft (67) innerhalb der Längsbohrung mit Kraftstoff mit niedrigem Flammpunkt, vorzugsweise mit Kraftstoff mit niedrigem Flammpunkt und schlechten Schmiereigenschaften, bewegen kann, wodurch der Zwischenraum zwischen dem axial beweglichen Schaft (67) und der Längsbohrung (77) ausgefüllt wird.

9. Kraftstoffventil (50) nach einem der Ansprüche 1 bis 8, wobei die Feder (66) eine Spiraldrahtfeder ist, die in einer Federkammer (88) im länglichen Kraftstoffventilgehäuse (52) aufgenommen ist, wobei sich die Federkammer (88) nur zur Längsbohrung (77) hin öffnet und die Federkammer über einen Zwischenraum zwischen dem axial beweglichen Schaft (67) und der Längsbohrung (77) in Fluidverbindung mit der mindestens einen Bohrung oder dem Kanal (57) steht, wobei der Zwischenraum vorzugsweise eine Längsnut (89) im axial beweglichen Schaft (67) aufweist.

10. Kraftstoffventil (50) nach einem der Ansprüche 1 bis 9, das ferner eine Kühlflüssigkeitseinlassöffnung und eine Kühlflüssigkeitsauslassöffnung und einen Kühlflüssigkeitsströmungsweg zum Kühlen des Kraftstoffeinspritzventils (50), insbesondere des Teils des Kraftstoffventils (50), der dem vorderen Ende am nächsten liegt, umfasst.

11. Kraftstoffventil nach einem der Ansprüche 1 bis 10, ferner mit einer Einrichtung zum selektiven Ermöglichen einer Strömung von der Pumpenkammer (82) zur Kraftstoffeinlassöffnung (53) zum Spülen des Kraftstoffventils (50).

12. Großer langsam laufender Zweitakt-Turbomotor mit Turboaufladung und Selbstzündung (1) mit einem Kraftstoffventil (50) nach einem der vorhergehenden Ansprüche.

13. Motor nach Anspruch 12, bei dem die Leitung (62), die zu der Kraftstoffeinlassöffnung (53) führt, eine doppelwandige Rohrleitung umfasst, wobei der Kraftstoff mit niedrigem Flammpunkt in einem inneren Lumen transportiert wird und wobei ein äußeres Lumen entlüftet wird und mit einem Sensor (63) zur Erfassung flüchtiger Kohlenwasserstoffe verbunden ist.

## Revendications

1. Soupape à carburant (50) pour l'injection de carburant liquide dans la chambre à combustion d'un gros moteur à combustion interne à deux temps à turbocompresseur, ladite soupape à carburant (50) comprenant :
un boîtier allongé de soupape à carburant (52) doté d'une extrémité arrière et d'une extrémité avant,
une buse (54) dotée d'une pointe fermée (59) et d'un intérieur creux qui forme une chambre (55) connectée à des trous de buse (56), ladite buse (54) étant disposée à l'extrémité avant dudit boîtier de soupape à carburant (52),
un port d'admission de carburant (53) dans ledit boîtier allongé de soupape à carburant (52) destiné à être connecté à une source (60) de carburant liquide pressurisé,
un port de liquide d'actionnement (92) dans ledit boîtier allongé de soupape à carburant (52),
un piston de pompe (80) reçu dans un premier trou (81) dans ledit boîtier allongé de soupape à carburant (52) doté d'une chambre de pompe (82) dans ledit premier trou (81) sur une face dudit piston de pompe (80),
un piston d'actionnement (83) reçu dans un second trou (84) dans ledit boîtier de soupape (52) et doté d'une chambre d'actionnement (85) dans ledit second trou (84) sur une face dudit piston d'actionnement (83),
ledit piston de pompe (80) étant connecté audit piston d'actionnement (83) pour bouger à l'unisson avec celui-ci,
ladite chambre d'actionnement (85) étant connectée audit port de liquide d'actionnement (92),
un élément soupape doté d'un arbre déplaçable axialement (67) qui est reçu dans un trou longitudinal (77) dans ledit boîtier de soupape allongé (52), ledit élément soupape ayant une position fermée et une position ouverte,
ledit arbre déplaçable axialement (67) étant pourvu d'un élément de fermeture (65) qui repose sur un siège de soupape (69) dans ladite position fermée, ledit élément de fermeture (65) s'étant soulevé dudit siège de soupape (69) dans ladite position ouverte et ledit arbre déplaçable axialement (67) étant incliné de manière élastique vers ladite position fermée par un ressort (66),
une conduite (57) étant prévue entre ladite chambre de pompe (82) et ledit siège de soupape (69),
ledit siège de soupape étant tourné vers ladite chambre (55) dans ladite buse (54),
ledit élément de fermeture (65) étant au moins partiellement disposé dans ladite chambre (55) dans ladite buse (54),
ledit élément de fermeture (65) étant conçu pour se déplacer vers ladite pointe fermée (59) pour obtenir un levage, et
ledit élément de fermeture (65) étant conçu pour s'éloigner de ladite pointe fermée (59) lorsque ledit élément de fermeture (65) se déplace vers ledit siège de soupape (69).

2. Soupape à carburant selon la revendication 1, dans laquelle ledit trou longitudinal (77) s'étend jusqu'audit siège de soupape (69), et un dégagement entre ledit arbre déplaçable axialement (67) et ledit trou longitudinal (77) crée une section de ladite conduite entre ladite chambre de pompe (82) et ledit siège de soupape (69).

3. Soupape à carburant selon la revendication 1, dans laquelle ledit dégagement entre ledit arbre déplaçable axialement (67) et ledit trou longitudinal (77) comprend une gorge longitudinale (78) dans ledit arbre déplaçable axialement (67).

4. Soupape à carburant selon l'une quelconque des revendications 1 à 3, dans laquelle ladite conduite entre ladite chambre de pompe (82) et ledit siège de soupape (69) comprend une ou plusieurs sections à diamètre réduit (64, 68) dans ledit arbre déplaçable axialement (67).

5. Soupape à carburant selon l'une quelconque des revendications 1 à 4, dans laquelle ladite conduite entre ladite chambre de pompe (82) et ledit siège de soupape (69) comprend plusieurs canaux ou trou (57) dans ledit boîtier de soupape allongé (52) qui s'étend depuis ladite chambre de pompe (82) jusqu'audit trou longitudinal (77).

6. Soupape à carburant selon l'une quelconque des revendications 1 à 4, dans laquelle ledit élément soupape est conçu pour s'ouvrir contre ladite inclinaison lorsque la pression du carburant dans ladite chambre de pompe (82) excède un seuil prédéterminé.

7. Soupape à carburant selon l'une quelconque des revendications 1 à 6, dans laquelle ladite chambre de pompe (82) a une sortie connectée audit au moins un canal ou trou (57) et une entrée connectée audit port d'entrée de carburant (53), de préférence via une soupape antiretour (74) située dans ledit boîtier allongé de soupape à carburant (52) et qui empêche l'écoulement depuis ladite chambre de pompe (82) jusqu'audit port d'entrée de carburant (53).

8. Soupape à carburant selon l'une quelconque des revendications 1 à 7, dans laquelle le diamètre dudit arbre mobile axialement (67) est inférieur au diamètre dudit trou longitudinal (77) à raison d'une marge qui garantit que ledit arbre mobile axialement (67) peut rentrer dans ledit trou longitudinal avec du carburant à point d'éclair bas, de préférence du carburant à point d'éclair bas ayant de faibles propriétés de lubrification, en remplissant le dégagement entre ledit arbre mobile axialement (67) et le trou longitudinal (77).

9. Soupape à carburant (50) selon l'une quelconque des revendications 1 à 8, dans laquelle ledit ressort (66) est un ressort en fil hélicoïdal qui est reçu dans une chambre à ressort (88) dans ledit boîtier allongé de soupape à carburant (52), ladite chambre à ressort (88) s'ouvrant seulement sur ledit trou longitudinal (77) et ladite chambre à ressort étant en connexion fluidique avec ledit au moins un trou ou canal (57) par l'intermédiaire d'un dégagement entre ledit arbre mobile axialement (67) et ledit trou longitudinal (77), ledit dégagement comprenant de préférence une gorge longitudinale (89) dans ledit arbre mobile axialement (67).

10. Soupape à carburant (50) selon l'une quelconque des revendications 1 à 9, comprenant en outre un port d'admission de liquide de refroidissement et un port de sortie de liquide de refroidissement et un passage d'écoulement de liquide pour refroidir la soupape d'injection de carburant (50), en particulier la section de la soupape à carburant (50) la plus proche de ladite extrémité avant.

11. Soupape à carburant selon l'une quelconque des revendications 1 à 10, comprenant en outre un moyen permettant de sélectivement l'écoulement depuis ladite chambre de pompe (82) jusqu'audit port d'admission de carburant (53) pour purger ladite soupape à carburant (50).

12. Gros moteur à combustion interne à deux temps à turbocompresseur (1) comportant une soupape à carburant (50) selon l'une quelconque des revendications précédentes.

13. Moteur selon la revendication 12, dans lequel la conduite (62) menant audit port d'admission de carburant (53) comprend une tuyauterie à double paroi, le carburant à point d'éclair bas étant transporté dans un lumen interne et un lumen externe étant ventilé et connecté à un capteur (63) pour la détection d'hydrocarbures volatils.
